# EUROPÄISCHE PATENTSCHRIFT

(11) **EP 2 913 560 B1**
(45) Veröffentlichungstag und Bekanntmachung des Hinweises auf die Patenterteilung: **07.11.2018**
(21) Anmeldenummer: 14186008.0
(22) Anmeldetag: 23.09.2014
(51) Int. Cl.: F16H 57/00, F16D 37/02, F16D 23/02

(54) **Welle-Losradanordnung und Kraftfahrzeuggetriebe hiermit**
Shaft idler assembly and vehicle transmission with the same
Système de poulie mobile /arbre et boîte de vitesses de véhicule en étant équipée

(30) Priorität: 20.11.2013 DE 102013019321
(43) Veröffentlichungstag der Anmeldung: 02.09.2015
(73) Patentinhaber: GETRAG B.V. & Co. KG, 74199 Untergruppenbach (DE)
(72) Erfinder: Bünder, Carsten, 70563 Stuttgart (DE); Balduf, Frank, 74382 Neckarwestheim (DE)
(74) Vertreter: Rausch, Gabriele

(56) Entgegenhaltungen:
- DE-A1- 19 938 933
- DE-A1-102007 031 811

## Beschreibung

Die vorliegende Erfindung betrifft eine Welle-Losradanordnung für ein Kraftfahrzeuggetriebe, mit einer Welle, mit einem Losrad, das drehbar an der Welle gelagert ist, und mit einem Wellenglied, das mit der Welle verbunden ist oder an der Welle ausgebildet ist, wobei das Losrad einen Losrad-Koppelabschnitt aufweist, wobei das Wellenglied einen Wellenglied-Koppelabschnitt aufweist und wobei der Losrad-Koppelabschnitt und der Wellenglied-Koppelabschnitt sich gegenüber liegen.

Ferner betrifft die vorliegende Erfindung ein Kraftfahrzeuggetriebe mit einer solchen Welle-Losradanordnung.

Welle-Losradanordnungen der oben beschriebenen Art werden häufig in Kraftfahrzeuggetrieben in Form von Stirnradgetrieben verwendet. Das Losrad besitzt eine Verzahnung, die mit einer Verzahnung eines Festrades in Eingriff steht, das mit einer weiteren Welle drehfest verbunden ist. Ferner ist dem Losrad in der Regel eine Schaltkupplung zugeordnet, um das Losrad mit der Welle drehfest zu verbinden oder hiervon zu entkoppeln.

In derartigen Kraftfahrzeuggetrieben treten häufig störende Geräusche auf. Darunter wird insbesondere verstanden, dass die Zahnflanken von Zahnrädern des Getriebes aufgrund des Zahnspiels und aufgrund von Anregungen aufeinander schlagen. Diese Geräusche werden vom Fahrer als störend empfunden und stellen eine Komforteinschränkung dar.

Generell ist es bekannt, zum Verhindern oder Verringern eines Getrieberasselns unterschiedliche Maßnahmen vorzusehen. Dies kann beinhalten, das Getriebe insgesamt besser zu dämmen, so dass die im Inneren des Getriebes entstehenden Losradgeräusche nicht in einen Fahrgastraum eines Kraftfahrzeuges dringen können. Eine weitere Möglichkeit besteht darin, das Zahnspiel generell zu verkleinern oder Dämpfungsmaßnahmen vorzusehen, die Relativbewegungen der Zahnflanken abbremsen können. Letztere Maßnahmen sind jedoch in der Regel mit einem dauerhaft verringerten Wirkungsgrad des Getriebes verbunden. Zur Verringerung der Übertragung von hochfrequenten Anregungen von einem Verbrennungsmotor auf ein Getriebe ist es zudem bekannt, das Getriebe bzw. eine zwischen Getriebe und Verbrennungsmotor angeordnete Kupplungseinrichtung über ein Zweimassenschwungrad oder Ähnliches mit dem Verbrennungsmotor zu verbinden. Derartige Zweimassenschwungräder sind jedoch teuer und benötigen erheblichen Bauraum.

Vor diesem Hintergrund ist es eine Aufgabe der Erfindung, eine Welle-Losradanordnung für ein Kraftfahrzeuggetriebe sowie ein Kraftfahrzeuggetriebe mit einer solchen Welle-Losradanordnung anzugeben, wobei diese Geräusche verringert werden können und dennoch ein vergleichsweise hoher Gesamtwirkungsgrad erhalten bleibt.

Diese Aufgabe wird bei durch eine Welle-Losradanordnung gemäß Anspruch 1 gelöst, wobei der Losrad-Koppelabschnitt und der Wellenglied-Koppelabschnitt über ein rheologisches Fluid miteinander gekoppelt sind, wobei das rheologische Fluid in einem Fluidgehäuse aufgenommen ist, das einen ersten Gehäuseabschnitt und einen zweiten Gehäuseabschnitt aufweist, wobei der erste Gehäuseabschnitt und der zweite Gehäuseabschnitt relativ zueinander verdrehbar sind, wobei der erste Gehäuseabschnitt mit dem Losrad drehfest verbunden ist und wobei der zweite Gehäuseabschnitt mit der Welle drehfest verbunden ist, wobei die Gehäuseabschnitte gegeneinander abgedichtet sind, so dass ausgeschlossen ist, dass das rheologische Fluid aus dem Fluidgehäuse entweicht.

Ferner wird die obige Aufgabe gelöst durch ein Kraftfahrzeuggetriebe mit einer erfindungsgemäßen Welle-Losradanordnung.

Schließlich wird die obige Aufgabe gelöst durch Verwendung eines rheologischen Fluids zur Dämpfung von Losradgeräuschen in Kraftfahrzeuggetrieben.

Losradgeräusche können Rasselgeräusche sein, aber z.B. auch Geräusche infolge eines Umschlagens im Triebstrang durch Spannen oder Entspannen desselben, oder dergleichen.

Das rheologische Fluid beinhaltet insbesondere ein elektrorheologisches und/oder ein magneto-rheologisches Fluid und insbesondere eine elektrorheologische und/oder eine magneto-rheologische Flüssigkeit.

Derartige Fluide haben die Eigenschaft, dass sich deren Fließverhalten und/oder Viskosität beeinflussen lässt. Bei einer elektrorheologischen Flüssigkeit kann dies beispielsweise durch das Anlegen einer elektrischen Spannung geschehen. Alternativ ist es möglich, Fluide durch ein Magnetfeld hinsichtlich ihrer Viskositätseigenschaften zu beeinflussen. Denkbar ist auch eine Beeinflussung durch Strahlung, beispielsweise durch elektromagnetische Strahlung im sichtbaren oder im nichtsichtbaren Bereich. Unter einer Kopplung mittels des rheologischen Fluids wird vorliegend verstanden, dass über das Fluid Kräfte oder Drehmomente übertragen werden können.

Folglich ist es möglich, durch Beeinflussung des rheologischen Fluides den Losrad-Koppelabschnitt und den Wellenglied-Koppelabschnitt stärker miteinander zu koppeln bzw. relative Drehbewegungen dazwischen zu dämpfen, indem die Viskosität des rheologischen Fluides durch Einflussnahme von außen erhöht wird. Diese Maßnahme kann beispielsweise dann getroffen werden, wenn Losradgeräusche auftreten oder Situationen vorliegen, bei denen Losradgeräusche vermehrt auftreten können.

Derartige Situationen sind beispielsweise insbesondere dann gegeben, wenn die Welle-Losradanordnung im Wesentlichen lastfrei ist, also über das Losrad kein Moment im Zug- oder Schubbetrieb übertragen wird, oder durch Schalt- und Synchronisierungsvorgänge durch Spannen und Entspannen des Triebstranges.

In Situationen, bei denen die Gefahr eines Getrieberasselns oder anderer Getriebegeräusche gering ist, kann das rheologische Fluid so beeinflusst werden, dass dessen Viskosität verringert ist, so dass die Kopplung zwischen Losrad-Koppelabschnitt und Wellenglied-Koppelabschnitt verringert ist bzw. die Dämpfung dazwischen verringert ist.

Durch diese Maßnahme können unnötige Schleppverluste vermieden werden, so dass der Gesamtwirkungsgrad nicht sinkt.

Das Losrad kann durch Beeinflussung der rheologischen Flüssigkeit gezielt beeinflusst werden, beispielsweise hinsichtlich Drehbewegungen relativ zu der Welle gedämpft werden, beschleunigt werden und/oder abgebremst werden.

Das Wellenglied kann als weiteres Losrad ausgebildet sein, das drehbar an der Welle gelagert ist (z.B. in Windungsgetrieben). Bevorzugt ist das Wellenglied jedoch drehfest mit der Welle verbunden oder einstückig hiermit ausgebildet.

Gegebenenfalls ist es denkbar, Synchronisierungsvorgänge zwischen dem Losrad und der Welle zu unterstützen oder komplett zu realisieren. Hierdurch kann auf Synchronisierungseinrichtungen in Schaltkupplungen gegebenenfalls verzichtet werden, oder die entsprechenden Bauteile können verkleinert oder kostengünstiger realisiert werden. Diese Vorteile sind in bestimmten Getriebearchitekturen auch zwischen zwei Losrädern möglich (z.B. bei Windungsgetrieben).

Insbesondere bei Doppelkupplungsgetrieben ist die Verwendung derartiger Welle-Losradanordnungen bzw. die Verwendung eines rheologischen Fluids zur Dämpfung von Losradgeräuschen bevorzugt. Denn diese zeigen eine erhöhte NVH-Sensibilität (Getriebegeräusche) auf Triebstranganregungen.

Die Tatsache, dass Doppelkupplungsgetriebe zu Getriebegeräuschen neigen, ist insbesondere aus dem Dokument DE 10 2009 014 705 B4 bekannt. In diesem Dokument wird vorgeschlagen, zwischen einem Losrad und einer Welle ein Dämpfungsmittel anzuordnen, das dazu ausgelegt ist, relative Drehbewegungen zwischen dem einen Losrad und der Welle zu dämpfen. Auf den Offenbarungsgehalt dieses Dokumentes wird vorliegend vollumfänglich Bezug genommen.

Gegebenenfalls ist es auch denkbar, weitere Mittel zur Verringerung von Getriebegeräuschen kleiner oder kostengünstiger zu dimensionieren oder vollständig wegzulassen, wie beispielsweise Schwungräder, insbesondere Zweimassenschwungräder oder Pendeldämpfer.

Insgesamt ist es möglich, durch Beeinflussung des rheologischen Fluides die freie Schwingung des Losrades in Bezug auf die Welle zu behindern und damit die NVH-Sensibilität des Getriebes zu verringern.

Rheologische Fluide der oben beschriebenen Art sind generell bekannt, so dass diese vorliegend zwecks einer kompakten Darstellung nicht mehr im Detail beschrieben werden. Beispielhaft sei verwiesen auf das Dokument WO 2007/121942 A1. Dessen Offenbarungsgehalt soll vorliegend durch Bezugnahme vollständig enthalten sein.

Die Aufgabe wird somit vollkommen gelöst.

Gemäß einer besonders bevorzugten Ausführungsform liegen sich der Losrad-Koppelabschnitt und der Wellenglied-Koppelabschnitt In axialer Richtung gegenüber.

Bei dieser Maßnahme kann das Wellenglied beispielsweise ein mit der Welle drehfest verbundener Ringkörper sein, beispielsweise in Form einer Führungsmuffe einer Schaltkupplung. Die Koppelabschnitte sind bei dieser Ausführungsform vorzugsweise ebenfalls generell ringförmig ausgebildet, und zwar in der Regel konzentrisch zu einer Achse der Welle.

Gemäß einer alternativen Ausführungsform, die mit der obigen Ausführungsform kombiniert werden kann, liegen sich der Losrad-Koppelabschnitt und der Wellenglied-Koppelabschnitt in radialer Richtung gegenüber.

Bei dieser Ausführungsform kann das rheologische Fluid beispielsweise in radialer Richtung zwischen einem Losrad und einer Welle angeordnet sein, beispielsweise in ähnlicher Lage wie ein Losradlager. Dabei ist es denkbar, ein ohnehin vorhandenes Lager, das radial innerhalb des Losrades angeordnet ist, mit einem solchen rheologischen Fluid zu füllen, Generell ist es auch denkbar, die Funktionen des Lagers und des rheologischen Fluides in einer Baugruppe zu integrieren.

Gemäß einer weiteren bevorzugten Ausführungsform ist das rheologische Fluid in einem Fluidgehäuse aufgenommen, das einen ersten Gehäuseabschnitt und einen zweiten Gehäuseabschnitt aufweist, wobei der erste Gehäuseabschnitt und der zweite Gehäuseabschnitt relativ zueinander verdrehbar sind, wobei der erste Gehäuseabschnitt mit dem Losrad drehfest verbunden ist und wobei der zweite Gehäuseabschnitt mit der Welle bzw. dem Wellenglied drehfest verbunden ist.

Ferner ist es möglich, das rheologische Fluid gegenüber der Umgebung elektrisch zu isolieren. Schließlich ist es möglich, in das Gehäuse Maßnahmen zu integrieren, um das rheologische Fluid zu beeinflussen. Beispielsweise können in das Gehäuse elektrische Kontakte oder sonstige Pole oder Kondensatorplatten oder Sender integriert werden, um das rheologische Fluid elektrisch, magnetisch oder auf sonstige Art und Weise zu beeinflussen. Die hierzu verwendeten elektrischen Leitungsanordnungen sind vorzugsweise elektrisch gegeneinander isoliert, so dass ein Kurzschluss ausgeschlossen werden kann.

Das Wellenglied kann einstückig mit der Welle ausgebildet sein, oder als separates Bauteil vorgesehen sein, das drehfest mit der Welle verbunden ist.

Bevorzugt ist es, wenn das Wellenglied ein Ringglied ist, wobei der Wellenglied-Koppelabschnitt radial außerhalb eines Außenumfanges der Welle angeordnet ist.

Hierdurch ist es insbesondere möglich, die Koppelabschnitte so anzuordnen, dass diese sich in axialer Richtung gegenüber liegen.

Generell ist die erfindungsgemäße Welle-Losradanordnung auf Kraftfahrzeuggetriebe unterschiedlicher Art anwendbar, wie Wandler-Automatikgetriebe, stufenlose Getriebe etc. Bevorzugt ist das Kraftfahrzeuggetriebe jedoch ein Stirnradgetriebe, insbesondere ein automatisiertes Schaltgetriebe, ein manuelles Schaltgetriebe, ein Doppelkupplungsgetriebe oder dergleichen.

Demzufolge ist es von besonderem Vorteil, wenn das Losrad mit einem weiteren Zahnrad in Eingriff steht.

Das weitere Zahnrad ist vorzugsweise ein Festrad, das drehfest mit einer weiteren Welle verbunden ist.

Ferner ist es insgesamt vorteilhaft, wenn die Welle-Losradanordnung eine Steuereinrichtung aufweist, die über eine elektrische Leitungsanordnung mit dem rheologischen Fluid verbunden ist, um die Viskosität des rheologischen Fluids zu ändern.

Über die elektrische Leitungsanordnung kann beispielsweise Energie zum Einrichten eines elektrischen Feldes übertragen werden, das das rheologische Fluid hinsichtlich der Viskosität beeinflusst. Über die elektrische Leitungsanordnung kann jedoch auch Energie zum Erzeugen eines Magnetfeldes oder zum Erzeugen von elektromagnetischer Strahlung übertragen werden, um die Viskosität des rheologischen Fluides zu ändern.

Die Leitungsanordnung ist vorzugsweise in den Bereich eines Fluidgehäuses geführt, um ein darin befindliches rheologisches Fluid zu beeinflussen.

Dabei ist es von besonderem Vorzug, wenn der Steuereinrichtung eine Sensoranordnung zugeordnet ist, die erfasst, wenn ein Geräusch an der Welle-Losradanordnung zu verringern ist, wobei die Steuereinrichtung in Antwort hierauf das rheologische Fluid ansteuert, um dessen Viskosität zu ändern.

Bei dieser Ausführungsform kann die Sensoranordnung beispielsweise als Mikrofon ausgebildet sein.

Es ist jedoch auch möglich, die Viskosität des rheologischen Fluides in Abhängigkeit von dem Zustand der Welle-Losradanordnung zu ändern, also beispielsweise in Abhängigkeit davon, ob die Welle-Losradanordnung unter Last steht oder nicht.

Bei dem erfindungsgemäßen Kraftfahrzeuggetriebe ist es möglich, ein rheologisches Fluid in einem eigenen Fluidgehäuse innerhalb eines Gehäuses des Kraftfahrzeuggetriebes anzuordnen, oder eine Mehrzahl derartiger Fluidgehäuse, die individuell bzw. selektiv beeinflussbar sind, um das jeweils enthaltene rheologische Fluid hinsichtlich seiner Viskosität zu ändern.

Gemäß einer weiteren bevorzugten Ausführungsform ist das Kraftfahrzeuggetriebe mit einem Gehäuse ausgestattet, innerhalb dessen ein Fluid zum Schmieren und/oder Kühlen von Radsätzen und/oder Lagern aufgenommen ist. Das in dem Gehäuse des Kraftfahrzeuggetriebes enthaltene Schmierfluid kann dabei die zu schmierenden Komponenten im Wege einer Tauchschmierung und/oder im Wege einer Einspritzschmierung schmieren.

Besonders bevorzugt ist es hierbei, wenn das in dem Gehäuse enthaltene Schmierfluid als rheologisches Fluid ausgebildet ist.

Das rheologische Schmierfluid, das in dem Gehäuse des Kraftfahrzeuggetriebes enthalten ist, kann dabei über geeignete Anregungsmittel entweder insgesamt hinsichtlich seiner Viskosität beeinflusst werden. Bevorzugt ist es jedoch, wenn das rheologische Schmierfluid bspw. an bestimmten Orten innerhalb des Gehäuses selektiv mittels geeigneter Anregungsmittel beeinflusst wird.

Beispielsweise können das Losrad und/oder das Wellenglied mit elektrischen Schleifkontakten versehen sein, um zwischen diesen Elementen eine elektrische Spannung anzulegen, die zu einem Feld zwischen den Koppelabschnitten führt, so dass das rheologische Fluid im Wesentlichen zwischen den Koppelabschnitten hinsichtlich seiner Viskosität beeinflusst wird. Bei einer Mehrzahl von Losrädern ist es dabei denkbar, die Losräder jeweils einzeln über jeweilige rheologische Fluide zu beeinflussen.

Anstelle von Schleifkontakten ist es auch denkbar, elektrische Pole einzurichten, die als Dipole oder nach der Art eines Plattenkondensators ausgebildet sein können. Ferner kann ein Anregungsfeld auch ggf. magnetisch erzeugt werden, wobei hierzu bspw. Elektromagnete in räumlicher Zuordnung zu den Koppelabschnitten angeordnet werden können.

Generell ist es möglich, das rheologische Fluid elektrisch, magnetisch oder elektromagnetisch zu beeinflussen.

Generell ist es denkbar, während gewünschter Dämpfungsphasen das rheologische Fluid mit einem über die Dauer der Dämpfungsmaßnahme konstanten Feld oder dergleichen zu beeinflussen. Alternativ ist es möglich, eine solche Dämpfungsmaßnahme vorzusehen, bei der ein Ansteuerungssignal zum Beeinflussen des rheologischen Fluides gepulst wird.

Wie eingangs erwähnt, ist es möglich, das rheologische Fluid dazu zu verwenden, um Getriebegeräusche zu verringern oder zu unterbinden. Alternativ oder zusätzlich ist es möglich, mittels eines derartigen rheologischen Fluides Synchronisierungsvorgänge zu unterstützen bzw. zu realisieren.

Die Dämpfungswirkung tritt zwischen dem Losrad-Koppelabschnitt und dem Wellenglied-Koppelabschnitt im Wesentlichen aufgrund von Schub- bzw. Scherspannungen auf. Die Koppelabschnitte können hierzu gegebenenfalls in geeigneter Weise ausgebildet sein. Der Abstand zwischen den Koppelabschnitten liegt vorzugsweise in einem Bereich von 0,1 mm bis 5 mm, insbesondere in einem Bereich von 0,5 bis 4 mm, vorzugsweise in einem Bereich von 1 mm bis 2 mm.

Ausführungsbeispiele der Erfindung sind in der Zeichnung dargestellt und werden in der nachfolgenden Beschreibung näher erläutert. Es zeigen:
- Fig. 1: eine schematische Darstellung einer erfindungsgemäßen Welle-Losradanordnung im Längsschnitt; und
- Fig. 2: eine schematische Darstellung eines Fluidgehäuses zur Verwendung in einer erfindungsgemäßen Welle-Losradanordnung.

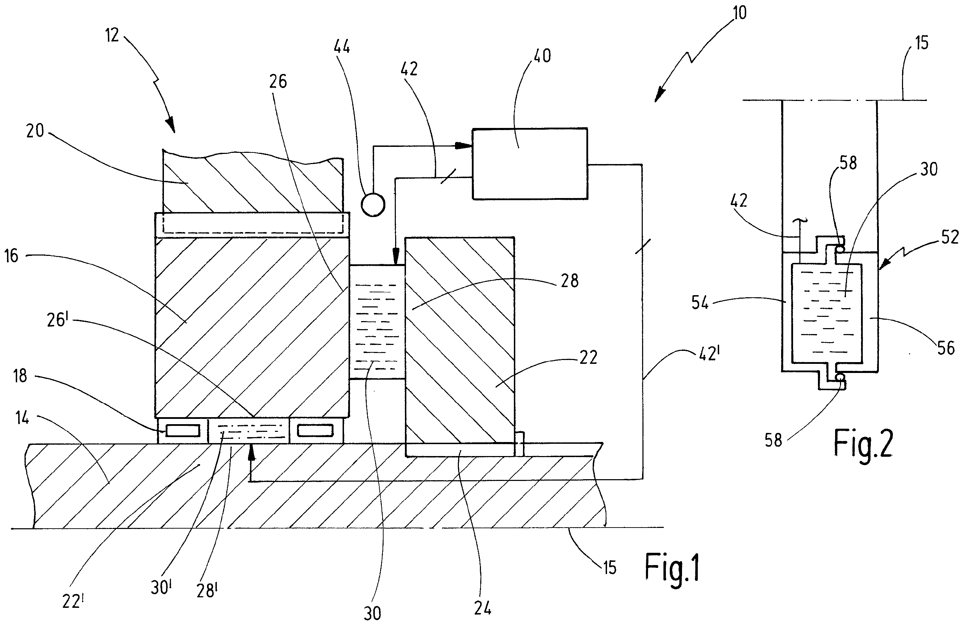

Fig. 1 zeigt in schematischer Form einen Abschnitt eines Kraftfahrzeuggetriebes 10, mit einer Welle-Losradanordnung 12.

Die Welle-Losradanordnung 12 beinhaltet eine Welle 14, die drehbar an einem nicht näher dargestellten Gehäuse gelagert ist, und zwar entlang einer Wellenachse 15.

An der Welle 14 ist ein Losrad in Form eines Losrades 16 drehbar gelagert. Zu diesem Zweck ist zwischen einem Außenumfangsabschnitt der Welle 14 und einem Innenumfangsabschnitt des Losrades 16 ein Losradlager 18 vorgesehen.

Das Losrad 16 steht in Eingriff mit einem Festrad 20, das an einer weiteren, nicht dargestellten Welle festgelegt ist. Ein derartiger Radsatz, bestehend aus dem Losrad 16 und dem Festrad 20, dient in Kraftfahrzeuggetrieben 10 häufig zur Einrichtung von Gangstufen. Zu diesem Zweck ist das Losrad 16 in der Regel über eine Schaltkupplung mit der Welle 14 verbindbar oder hiervor lösbar. Aus Gründen einer übersichtlicheren Darstellung ist eine solche Schaltkupplung in Fig. 1 nicht dargestellt.

An der Welle 14 ist ein Wellenglied 22 drehfest festgelegt. Das Wellenglied 22 ist vorliegend als Ringglied ausgebildet und mit der Welle 14 über eine Welle-Nabe-Verbindung 24 verbunden. Die Welle-Nabe-Verbindung 24 kann beliebig ausgeführt sein, z.B. auch aus einem Stück mit der Welle. Das Wellenglied 22 kann Teil einer Schaltkupplungsanordnung sein, beispielsweise eine Führungsmuffe, an der eine Schaltmuffe axial verschieblich gelagert ist.

Das Losrad 16 weist einen Losrad-Koppelabschnitt 26 in Form einer Ringfläche auf, die an einer axialen Stirnseite ausgebildet ist, die dem Wellenglied 22 gegenüber liegt. In Zuordnung zu dem Losrad-Koppelabschnitt 26 weist das Wellenglied 22 einen Wellenglied-Koppelabschnitt 28 auf, der ebenfalls als Ringfläche ausgebildet ist und an einer axialen Stirnseite des Wellengliedes 22 ausgebildet ist, derart, dass sich der Losrad-Koppelabschnitt 26 und der Wellenglied-Koppelabschnitt 28 in axialer Richtung gegenüber liegen.

Zwischen den Koppelabschnitten 26, 28 ist ein rheologisches Fluid 30 angeordnet, das insbesondere als hinsichtlich seiner Viskosität beeinflussbares rheologisches Fluid ausgebildet ist, vorzugsweise als elektrorheologisches Fluid.

Die Welle-Losradanordnung 12 weist ferner eine Steuereinrichtung 40 auf, die über eine elektrische Leitungsanordnung 42 mit dem rheologischen Fluid 30 gekoppelt ist, insbesondere über eine elektromagnetische Wirkverbindung. Schließlich ist die Steuereinrichtung 40 mit einer Sensoranordnung 44 gekoppelt, insbesondere über eine elektromagnetische Wirkverbindung, die dazu ausgebildet ist, Getriebegeräusche zu erfassen.

Die Steuereinrichtung 40 ist dazu ausgebildet, das rheologische Fluid 30 mit elektromagnetischer Energie zu beaufschlagen, beispielsweise in Form eines elektrischen Feldes, um die Viskosität des rheologischen Fluides 30 zu ändern. Sofern die Viskosität gering ist, ist die Kopplung zwischen dem Losrad 16 und dem Wellenglied 22 gering, so dass bei einer Relativbewegung geringe Schleppverluste entstehen. Wenn andererseits die Steuereinrichtung 40 das rheologische Fluid 30 so ansteuert, dass dessen Viskosität erhöht ist, ist die Kopplung zwischen dem Losrad 16 und dem Wellenglied 22 erhöht, so dass sich insbesondere eine Dämpfung von Relativbewegungen zwischen Losrad 16 und Wellenglied 22 erzielen lässt.

In Fig. 1 ist ferner dargestellt, dass ein Losrad-Koppelabschnitt 26' auch an einer radialen Innenseite des Losrades 16 ausgebildet sein kann. In diesem Fall ist ein Wellenglied-Koppelabschnitt 28' an einer radialen Außenseite eines einstückig mit der Welle 14 verbundenen Wellengliedes 22' ausgebildet, so dass sich die Koppelabschnitte 26', 28' in radialer Richtung gegenüber liegen, wobei dazwischen ein rheologisches Fluid 30' angeordnet ist.

Fig. 1 zeigt jeweils nur in schematischer Form, wie sich das Losrad 16 und das Wellenglied 22 über das rheologische Fluid 30 miteinander koppeln lassen. In der Praxis wird das rheologische Fluid 30 bspw. in einem Fluidgehäuse aufgenommen, das beispielhaft in Fig. 2 schematisch dargestellt und mit 52 bezeichnet ist. Das Fluidgehäuse 52 ist vorzugsweise als Ringgehäuse konzentrisch zu der Wellenachse 15 ausgebildet und beinhaltet einen ersten Gehäuseabschnitt 54 und einen zweiten Gehäuseabschnitt 56, die relativ zueinander um die Wellenachse 15 herum drehbar sind. Die Gehäuseabschnitte 54, 56 sind dabei über eine schematisch angedeutete Dichtungseinrichtung 58 gegeneinander abgedichtet, um einen geschlossenen Raum für das rheologische Fluid 30 zu bilden.

Der eine Gehäuseabschnitt 54 kann dabei beispielsweise mit dem Lostrad 16 verbunden werden, und der zweite Gehäuseabschnitt 56 kann beispielsweise mit dem Wellenglied 22 verbunden werden. Die Darstellung der Fig. 2 eignet sich dabei insbesondere für das rheologische Fluid 30 der Fig. 1 zwischen den Wellenabschnitten 26, 28, die sich axial gegen überliegen. Hierbei sind die Gehäuseabschnitte 54, 56 axial zueinander ausgerichtet.

Für das rheologische Fluid 30' der Fig. 1 können die Gehäuseabschnitte 54, 56 auch radial zueinander ausgerichtet sein.

Anstelle der Bereitstellung eines eigenen Fluidgehäuses 52 für ein rheologisches Fluid ist es auch möglich, das in einem Kraftfahrzeuggetriebe enthaltene Schmierfluid generell als rheologisches Fluid zu realisieren.

## Patentansprüche

1. Welle-Losradanordnung (12) für ein Kraftfahrzeuggetriebe (10), mit
- einer Welle (14);
- einem Losrad (16), das drehbar an der Welle (14) gelagert ist; und
- einem Wellenglied (22), das mit der Welle (14) verbunden ist oder an der Welle (14) ausgebildet ist;
wobei das Losrad (16) einen Losrad-Koppelabschnitt (26) aufweist, wobei das Wellenglied (22) einen Wellenglied-Koppelabschnitt (28) aufweist und wobei der Losrad-Koppelabschnitt (26) und der Wellenglied-Koppelabschnitt (28) sich gegenüber liegen, und wobei der Losrad-Koppelabschnitt (26) und der Wellenglied-Koppelabschnitt (28) über ein rheologisches Fluid (30) miteinander gekoppelt sind,
**dadurch gekennzeichnet, dass**
das rheologische Fluid (30) in einem Fluidgehäuse (52) aufgenommen ist, das einen ersten Gehäuseabschnitt (54) und einen zweiten Gehäuseabschnitt (56) aufweist, wobei der erste Gehäuseabschnitt (54) und der zweite Gehäuseabschnitt (56) relativ zueinander verdrehbar sind, wobei der erste Gehäuseabschnitt (54) mit dem Losrad (16) drehfest verbunden ist und wobei der zweite Gehäuseabschnitt (56) mit der Welle (14) drehfest verbunden ist und wobei die Gehäuseabschnitte (54, 56) gegeneinander abgedichtet sind, so dass ausgeschlossen ist, dass das rheologische Fluid (30) aus dem Fluidgehäuse (52) entweicht.

2. Welle-Losradanordnung nach Anspruch 1, **dadurch gekennzeichnet, dass** der Losrad-Koppelabschnitt (26) und der Wellenglied-Koppelabschnitt (28) sich in axialer Richtung gegenüber liegen.

3. Welle-Losradanordnung nach Anspruch 1 oder 2, **dadurch gekennzeichnet, dass** der Losrad-Koppelabschnitt (26') und der Wellenglied-Koppelabschnitt (28') sich in radialer Richtung gegenüber liegen.

4. Welle-Losradanordnung nach einem der Ansprüche 1 - 3, **dadurch gekennzeichnet, dass** das Wellenglied (22) ein Ringglied ist, wobei der Wellenglied-Koppelabschnitt (28) radial außerhalb eines Außenumfanges der Welle (14) angeordnet ist.

5. Welle-Losradanordnung nach einem der Ansprüche 1 - 4, **dadurch gekennzeichnet, dass** das Losrad (16) mit einem weiteren Zahnrad (20) in Eingriff steht.

6. Welle-Losradanordnung nach einem der Ansprüche 1 - 5, **dadurch gekennzeichnet, dass** die Welle-Losradanordnung (12) eine Steuereinrichtung (40) aufweist, die über eine elektrische Leitungsanordnung (42) mit dem rheologischen Fluid (30) verbunden ist, um die Viskosität des rheologischen Fluids (30) zu ändern.

7. Welle-Losradanordnung nach Anspruch 5, **dadurch gekennzeichnet, dass** eine der Steuereinrichtung (40) zugeordnete Sensoranordnung (44) erfasst, wenn ein Geräusch an der Welle-Losradanordnung (12) zu verringern ist, wobei die Steuereinrichtung (40) in Antwort hierauf das rheologische Fluid (30) ansteuert, um dessen Viskosität zu ändern.

8. Kraftfahrzeuggetriebe (10) mit einer Welle-Losradanordnung (12) nach einem der Ansprüche 1 - 7.

9. Verwendung eines rheologischen Fluids (30) zur Dämpfung von Losradgeräuschen in Kraftfahrzeuggetrieben (10) nach Anspruch 8.

## Claims

1. Shaft idler assembly (12) for a vehicle transmission (10), having
- a shaft (14);
- an idler (16) which is mounted rotatably on the shaft (14); and
- a shaft member (22) which is connected to the shaft (14) or is configured on the shaft (14);
the idler (16) having an idler coupling section (26), the shaft member (22) having a shaft member coupling section (28), and the idler coupling section (26) and the shaft member coupling section (28) lying opposite one another, and the idler coupling section (26) and the shaft member coupling section (28) being coupled to one another via a rheological fluid (30),
**characterized in that**
the rheological fluid (30) is received in a fluid housing (52) which has a first housing section (54) and a second housing section (56), it being possible for the first housing section (54) and the second housing section (56) to be rotated relative to one another, the first housing section (54) being connected fixedly to the idler (16) so as to rotate with it, and the second housing section (56) being connected fixedly to the shaft (14) so as to rotate with it, and the housing sections (54, 56) being sealed with respect to one another, with the result that it is precluded that the rheological fluid (30) escapes from the fluid housing (52).

2. Shaft idler assembly according to Claim 1, **characterized in that** the idler coupling section (26) and the shaft member coupling section (28) lie opposite one another in the axial direction.

3. Shaft idler assembly according to Claim 1 or 2, **characterized in that** the idler coupling section (26') and the shaft member coupling section (28') lie opposite one another in the radial direction.

4. Shaft idler assembly according to one of Claims 1 to 3, **characterized in that** the shaft member (22) is an annular member, the shaft member coupling section (28) being arranged radially outside an outer circumference of the shaft (14).

5. Shaft idler assembly according to one of Claims 1 to 4, **characterized in that** the idler (16) is in engagement with a further gearwheel (20).

6. Shaft idler assembly according to one of Claims 1 to 5, **characterized in that** the shaft idler assembly (12) has a control device (40) which is connected via an electric line arrangement (42) to the rheological fluid (30), in order to change the viscosity of the rheological fluid (30).

7. Shaft idler assembly according to Claim 5, **characterized in that** a sensor arrangement (44) which is assigned to the control device (40) detects when a noise is to be reduced at the shaft idler assembly (12), the control device (40) actuating the rheological fluid (30) in response to this, in order to change the viscosity of the said rheological fluid (30).

8. Vehicle transmission (10) having a shaft idler assembly (12) according to one of Claims 1 to 7.

9. Use of a rheological fluid (30) for damping idler noise in vehicle transmissions (10) according to Claim 8.

## Revendications

1. Ensemble (12) de roue libre d'arbre pour la transmission (10) d'un véhicule automobile, l'ensemble présentant
un arbre (14),
une roue libre (16) montée à rotation sur l'arbre (14) et
un organe d'arbre (22) relié à l'arbre (14) ou formé sur l'arbre (14),
la roue libre (16) présentant une partie (26) d'accouplement de roue libre, l'organe d'arbre (22) présentant une partie (28) d'accouplement d'organe d'arbre, la partie (26) d'accouplement de roue libre et la partie (28) d'accouplement d'organe d'arbre étant situées face à face, la partie (26) d'accouplement de roue libre et la partie (28) d'accouplement d'organe d'arbre étant reliées l'une à l'autre par l'intermédiaire d'un fluide rhéologique (30),
**caractérisé en ce que**
le fluide rhéologique (30) est repris dans un boîtier (52) de fluide qui présente une première partie de boîtier (54) et une deuxième partie de boîtier (56), la première partie de boîtier (54) et la deuxième partie de boîtier (56) pouvant tourner l'une par rapport à l'autre,
la première partie de boîtier (54) étant reliée à rotation solidaire à la roue libre (16) et la deuxième partie de boîtier (56) étant reliée à rotation solidaire à l'arbre (14) et
les parties de boîtier (54, 56) étant séparées hermétiquement l'une de l'autre de manière à exclure que le fluide rhéologique (30) s'échappe du boîtier (52) pour fluide.

2. Ensemble de roue libre d'arbre selon la revendication 1, **caractérisé en ce que** la partie (26) d'accouplement de roue libre et la partie (28) d'accouplement d'organe d'arbre se font face dans la direction axiale.

3. Ensemble de roue libre d'arbre selon les revendications 1 ou 2, **caractérisé en ce que** la partie (26') d'accouplement de roue libre et la partie (28') d'accouplement d'organe d'arbre se font face dans la direction radiale.

4. Ensemble de roue libre d'arbre selon l'une des revendications 1 à 3, **caractérisé en ce que** l'organe d'arbre (22) est un organe annulaire, la partie (28) d'accouplement d'organe d'arbre étant disposée radialement à l'extérieur de la périphérie extérieure de l'arbre (14).

5. Ensemble de roue libre d'arbre selon l'une des revendications 1 à 4, **caractérisé en ce que** la roue libre (16) engage une autre roue dentée (20).

6. Ensemble de roue libre d'arbre selon l'une des revendications 1 à 5, **caractérisé en ce que** l'ensemble (12) de roue libre d'arbre présente un dispositif de commande (40) qui est relié au fluide rhéologique (30) par l'intermédiaire d'un circuit électrique (42) en vue de modifier la viscosité du fluide rhéologique (30).

7. Ensemble de roue libre d'arbre selon la revendication 5, **caractérisé en ce qu'**un ensemble de capteur (44) associé au dispositif de commande (40) détecte s'il faut diminuer un bruit sur l'ensemble (12) de roue libre d'arbre, le dispositif de commande (40) commandant en réaction le fluide rhéologique (30) pour modifier sa viscosité.

8. Transmission (10) pour véhicule automobile présentant un ensemble (12) de roue libre d'arbre selon l'une des revendications 1 à 7.

9. Utilisation d'un fluide rhéologique (30) pour amortir des bruits de roue libre dans des transmissions (10) pour véhicule automobile selon la revendication 8.
